Europäisches Patentamt

European Patent Office

Office européen des brevets

(19)

(11) Publication number: **0 050 960**
**B1**

# (12) EUROPEAN PATENT SPECIFICATION

(45) Date of publication of patent specification: **23.07.86**

(51) Int. Cl.⁴: **F 16 K 31/04,** G 01 P 15/00

(21) Application number: **81304949.1**

(22) Date of filing: **21.10.81**

(54) **Motor operated valve.**

(30) Priority: **23.10.80 GB 8034185**

(43) Date of publication of application:
**05.05.82 Bulletin 82/18**

(45) Publication of the grant of the patent:
**23.07.86 Bulletin 86/30**

(84) Designated Contracting States:
**AT BE CH DE FR GB IT LI LU NL SE**

(56) References cited:
**DE-A-2 554 771**
**US-A-2 940 038**
**US-A-3 612 972**
**US-A-4 016 432**
**US-A-4 091 662**

**ELECTRONIC
ENGINEERING,vol.34,no.468,February 1967
pages 106-109,London,G.B.,V.BÖHM et al.:A
digital instrument for measuring the slippage
of asynchronous motors"**

(73) Proprietor: **Norton, Colin Frank
Bank Tree House Hurstbourne Tarrant
Andover Hampshire (GB)**

(72) Inventor: **Harvey, Raymond Godfrey Ashley
18 Westwood Road
Greenham Newbury Berkshire (GB)**
Inventor: **Evans, David S.
Tanbury House
Highclere Newbury Berkshire (GB)**

(74) Representative: **Read, Matthew Charles et al
Venner Shipley & Co. 368 City Road
London EC1V 2QA (GB)**

Courier Press, Leamington Spa, England.

# Description

This invention relates to a motor operated valve with a torque control system and more particularly to a motor operated valve comprising a valve housing having a fluid inlet and outlet, a valve member mounted for movement in the housing between relatively open and closed positions for selectively obturating fluid flow between the inlet and the outlet, a motor for driving the valve member, means for controlling torque exerted by the motor, and means for controlling the position of the valve member.

In many industrial applications such as process plants, valves are opened and closed by electric or hydraulic motors. A typical example is a motor driven butterfly valve fitted in a hydraulic or pneumatic flow system. The flow in the system can only be stemmed reliably if the valve's movable valve member is closed at a seating pressure greater than the maximum flow pressure that can occur in the system. The torque required from the motor to achieve closure of the valve is known as the seating torque. The valve motor thus needs to be capable of exerting the seating torque with some reserve power.

Consequently, in the absence of some reliable control to stop the motor, the motor would drive the valve shut and then continue running and possibly damage the valve before the motor became overloaded and tripped or stalled. Accordingly, mechanical limit switches have been provided to define open and shut positions for the valve such that the valve motor will drive the valve member until a limit switch is encountered and the switch will then operate to switch off the motor. Also a mechanical arrangement is conventionally provided to limit the maximum motor torque. The torque limiting arrangement usually consists of a spring which is tensioned by the motor drive in dependence upon the motor torque, the spring actuating a switch to turn off the motor if the torque becomes too great. Thus, for example, if a foreign object becomes jammed in the valve, the valve motor will shut off rather than damage the valve. The known mechanical arrangements for controlling the motor movement and torque are bulky and take up a significant amount of space. Also, the mechanical switches are prone to wear and mechanical failures. Futhermore, the switches have to be carefully adjusted in terms of their position to ensure that they will operate as desired. The switches and spring arrangment usually has to be specially designed for different models and sizes of valve.

A motor driven valve actuator with the described mechanical position and torque limiting arrangements is the Auma SA6—SA100 made by Riester Kg., 784 Mullheim, Baden, West Germany, and the Series R and S actuators made by Siemens A.G.

It has been proposed in US—A—3,612,972 to provide a valve actuator, in which motor torque is detected electronically. In this arrangement, excess motor current produced in the motor driving circuits by an overtorque condition is monitored and compared with a preset reference value by a trigger circuit. The output of the trigger circuit is fed through a logic system which blocks further movement of the motor, the logic system being unblocked upon reversal of the motor. The output of the logic system to operate solenoids which controls the supply of current to the motor. This arrangement thus controll the position of the valve member solely in terms of torque and does not provide a means by which limits of valve travel can be positively monitored. The prior system thus utilises the premise that at the limits of movement of the valve member an overtorque condition will occur.

Thus, the system cannot distinguish between an overtorque condition resulting from the valve member becoming jammed in a partially open condition, e.g. in response to a foreign body becoming lodged in the valve, and an overtorque condition which signifies a limit of travel for the valve member.

An alternative electrical method of monitoring motor torque is disclosed in US Patent 4 091 662, wherein motor slip is monitored. There is no suggestion in the prior specification that motor displacement could be monitored.

An object of the present invention is to provide a motor operated valve in which both valve position and torque can be monitored electronically with a single sensor means.

Another object of the invention is to provide a single design of torque control means and position control means which can be readily adjusted for different designs of valve without the need for complex mechanical design changes as in the prior art.

In accordance with the present invention, these objects are accomplished by a motor operated valve characterised by means for producing a cyclic signal representative of the actual speed of the motor; means for operating on said speed signal to provide a torque signal indicative of the torque exerted by the motor; torque limit means for comparing said torque signal with a preset value thereof to provide torque output signal indicative of whether the motor torque exceeds a given value; means for controlling driving power supplied to the motor in dependence upon said torque output signal, so as to control the motor torque to not exceed said given value; position means responsive to said cyclic signal to provide a position signal representative of the position of the valve member, and position comparing means for comparing said position signal with at least a preset value thereof to provide a position output signal indicative of when the valve member reaches a given position.

The motor operated valve according to the invention has the advantage that the prior bulky mechanical torque limiting arrangement is eliminated and the torque limit can easily be adjusted by altering the preset value of the torque signal. Thus the delicate adjustment of spring tension of the prior art is no longer required. Also a single design of improved torque control means can be used with different value housings and motors, whereas in the past the torque control mechanism was usually specially designed for each size and model of valve.

Thus in accordance with the invention, a simple convenient means of electronically monitoring both valve displacement and valve position is provided, thus enabling discrimination between an over torque condition in which a foreign body is jammed in the valve, and a condition in which the valve member reaches a limit of its travel.

As previously mentioned, the signal representative of the torque of the motor is produced in accordance with the invention by operating upon a signal representative of the actual speed of the motor. When a motor is driven so that it will assume a given speed under particular load conditions, and the load conditions are then changed, the motor speed changes and this speed change is a function of the torque exerted by the motor against the changed load. Thus, if the valve motor is driven by a constant supply of power, the motor will under a given light load assume a particular speed, but when the load increases its speed decreases. Thus, the actual motor speed is a function of motor torque and this is used to determine motor torque in the invention.

Typically, the motor will for given load conditions operate at a speed determined by a parameter of driving power supplied to the motor. Preferably the torque signal is produced by comparing the actual motor speed signal with a signal which is a function of said parameter of the power supplied to the motor so as to compensate automatically in the torque signal for any variations in the power supply to the motor.

In order that the invention may be more fully understood an embodiment thereof will now be described with reference to the accompanying drawings wherein:

Figure 1 is a schematic view of a motor driven butterfly valve, and

Figure 2 is a schematic circuit diagram of a control system associated with the valve shown in Figure 1.

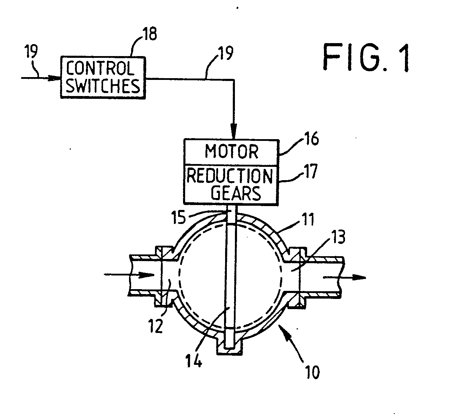

Referring firstly to Figure 1, there is shown a butterfly valve 10 suitable for controlling hydraulic and pneumatic flows in a chemical process plant such as an oil refinery. The valve 10 comprises a housing 11 having a fluid inlet 12 and an outlet 13. A valve member 14 in the form of a disc is rotatably mounted within the housing on a shaft 15, for rotation through 90° between an open position shown in dotted outline and the closed position shown. A suitable valve seat (not shown) may be provided within the housing 11 against which the disc 14 seats in the closed position. The valve disc 14 is rotated between the open and closed positions by a three phase synchronous electric motor 16 through reduction gearing 17. The motor 16 is driven by a three phase supply, and can be stopped, started and reversed by means of control switches 18 connected in power supply lines 19 to the motor. These switches 18 may be controlled electrically from a remote location, for example a control room.

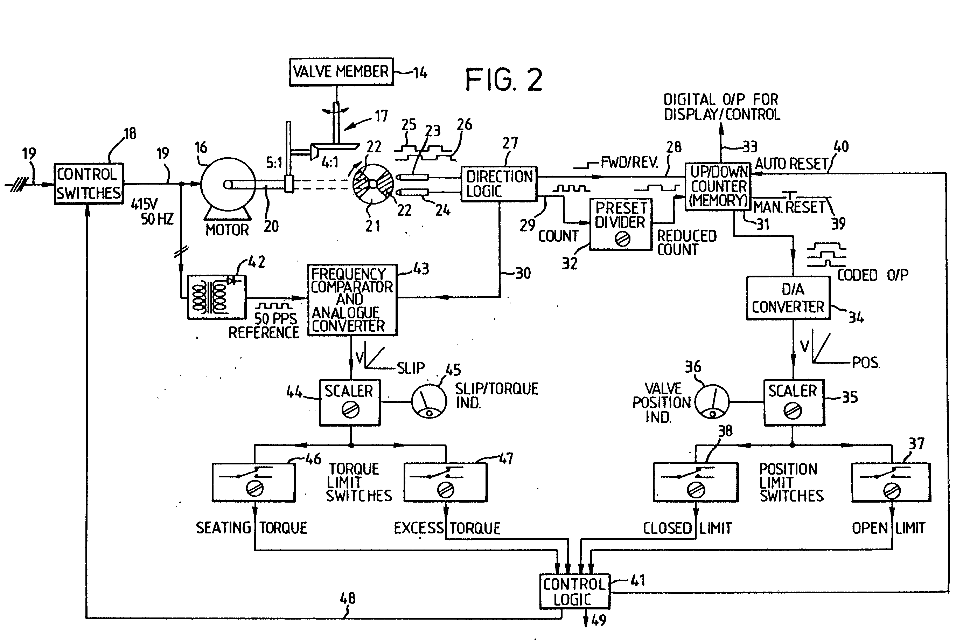

Reference will now be made to Figure 2, where a torque and movement control system for the motor 16 is shown.

The motor 16 has a shaft 20 which drives the reduction gearing 17.

Connected to the motor shaft 20 is an arrangement for detecting the rotation speed of the motor. The arrangement consists of a non-ferrous disc 21 mounted to rotate with the shaft 20 and on which is mounted a pair of magnets 22. Two Hall effect switches 23, 24 are mounted spaced apart in a stationary configuration so as to be switched by the magnets 22. Thus, considering the Hall effect switch 23 for example, it will be switched on as each magnet 22 rotates into proximity with the switch, and switches off when the magnets move away thus producing a rectangular waveform as shown at 25, which includes two 180° spaced pulses for each rotation of the shaft 20, the frequency of the pulses being determined by the rotational speed of the shaft 20. The switch 24 produces a similar waveform 26 but because the switch 24 is spaced apart from the switch 23, the waveforms from the switches have a relative phase shift. This phase shift is so arranged that the rectangular pulses of the two waveforms overlap in time.

The phase shift is used to determine the sense of rotation of the shaft 20. A direction logic circuit 27 determines whether the rising edges of the pulses in the waveform 25 lead or lag those in the waveform 26 thereby to indicate if the motor is running in a forward or reverse direction. The output of the direction logic circuit is a binary signal on line 28, which is either 0 or 1 depending whether the motor is running in a forward or reverse direction.

The direction logic circuit 27 also provides an output on lines 29, 30 which corresponds to the waveform produced by one of the Hall effect switches 23, 24. The line 29 is connected to a circuit arrangement for sensing the displacement of the valve member 14, whereas the line 30 is connected to a circuit arrangement for sensing the motor torque.

The displacement sensing circuit consists of an up/down counter 31 which counts pulses derived by the Hall effect switch 23. It will be appreciated that each pulse produced by the switch 23 is representative of a successive half revolution of the motor. The movement of the valve member 14 resulting from each revolution of the motor 16 will depend upon the gearing ratio of the reduction gearing 17. The effect of the reduction gearing is simulated by a programmable divider 32 which is set to divide the pulse rate of line 29 by a factor selected in dependence upon the reduction gearing ratio. The counter 31 counts the divided pulse rate from the divider 32, the count being accumulated upwardly or downwardly in dependence upon whether the motor is running in a forward or reverse direction as indicated by the signal on line 28. The resulting count in the counter 31 is thus representative of the position of the valve member.

The counter 31 is preferably of the non-volatile type such that when the circuit is switched off, the valve position information is retained by the counter. Alternatively, the counter can be provided with a bias battery so that it is permanetly engergised.

The counter 31 provides on line 33 a digital output indicative of the count, which can be fed to a digital display or to remote valve position monitoring circuitry. For example in a process plant incorporating many such valves it is envisaged that it will be desirable to use a microprocessor responsive to many such outputs 33, to control the various valve motors 16 in dependence upon the valve positions so as to achieve a desired process control effect.

The digital output of the counter 31 is also fed to a digital to analogue converter 34 which produces an output voltage of a magnitude proportional to the accummulated count and hence the valve position. This voltage is fed to a scaler 35, typically a potentiometer and hence to an analogue meter 36, typically an analogue bar graph. The analogue voltage from the scaler 34 is also fed to position limit switch units 37, 38. The switch units 37, 38 establish respective preset reference voltages, the reference voltage for switch 37 representing the open limit for the valve and the reference voltage for switch 38 representing the closed limit. The output of the scaler 35 is compared by the switch units with the pre-set reference voltages and when equality is detected an appropriate one of the switch units 37, 38 will operate to provide an output signal. The output signals of the switches 37, 38 may be used to stop or reverse the motor 16 as will be explained hereinafter.

The counter 31 is provided with a manual reset control 39 and may also have an automatic reset 40 responsive to either the switch 37 or 38 via control logic 41 in order to prevent errors accumulating in the counter.

The torque sensing circuit will now be described. The synchronous motor 16 when only lightly loaded will run at a speed determined by the frequency of the mains supply on line 19. Thus, assuming for the moment that the mains frequency is constant, the motor will after initial start up transients run at a constant speed when lightly loaded. When the load increases, the motor develops more torque and the motor speed reduces commensurately. This speed reduction is indicative of the motor torque.

A reference signal indicative of the speed that the motor will assume under a light load is produced by monitoring the frequency of the mains supply to the motor. A single phase of the mains supply is fed to a circuit 42 including a step down transformer and rectifier which produces a rectangular pulse waveform of a frequency corresponding to the mains frequency. The frequency of the reference signal from the circuit 42 is compared with the frequency of the signal on line 30, which it will be appreciated is representative of the actual speed of the motor. The frequency comparison is effected by a circuit 43 which produces an analogue voltage of a magnitude indicative of the frequency difference and hence the motor torque. The voltage is fed through a scaler 44 to an analogue bar graph 45. The output of the scaler 44 is also fed to limit switches 46, 47 which operate in the same manner as switches 37, 38 and define a pre-set seating torque for the valve and an excess torque. The switches 46, 47 thus define when the torque exceeds a desired seating torque, and an excess torque greater than the seating torque.

The outputs of the switches 37, 38, 46, 47 are logically combined by the control logic 41 to define predetermined control situations for the motor. The control logic 41 provides an output on line 48 for operating the control switches 18 in response to fault conditions as indicated by the switches 37, 38, 46, 47.

In considering the control requirements it is necessary to bear in mind that the motor starting torque is likely to be greater than the required seating torque. This higher torque will appear at both ends of the travel of the valve member 14 when starting the motor, and at any other starting position within the travel. The circuit 41 therefore includes means for distinguishing between starting and closing torques, for example by ignoring the high torques on start up, for a limited period. Also, the control torque logic 41 may operate the switches 18 in a manner to reverse the valve member 14 away from an obstruction in order to release it, if desired. One or two further attempts to open or close the valve may then be made and if this does not clear the obstruction an alarm signal is generated on line 49.

The torque sensing circuit can be modified for use with a hydraulic motor rather than the described electric motor 16, in which case the reference signal indicative of the lightly loaded motor speed would be derived by monitoring the supply pressure of hydraulic fluid to the motor. Alternatively if it can be assumed that the motor will always run at a constant speed when lightly loaded, the reference signal can be independently generated without monitoring the input energy to the motor. The advantage of monitoring the supply is that the value of the reference signal is automatically adjusted to take account of speed changes resulting from changes in the supply of power to the motor.

It will be appreciated that in the described circuit the limits of travel and torque for the valve are defined electrically and can be readily adjusted without the need for complicated mechanical adjustments as in the prior art. Also, the circuit can be used with different reduction gear ratios by adjusting the setting of the divider 32. Thus one circuit design can be used for different size and model valve motors and gearings.

Many modifications and variations falling within the scope of the invention are possible. For example certain models of digital counter will automatically perform the function of the direction logic 27, in which case the logic circuit 27 can be dispensed with. Also, whilst the displays 36, 45 and the switches 37, 38, 46, 47 have been described as analogue devices, they could operate digitally if desired.

Furthermore, in a chemical process plant, many such valve arrangements as described herein may be utilised and it may be desirable to control the valves automatically for example, utilising a microprocessor such that if one valve becomes jammed certain of the other valves are automatically opened or closed to maintain the plant in a safe condition. For such an arrangement, the outputs of switches 37, 38, 46, 47 from a plurality of valves may be fed as inputs to a microprocessor, which provides outputs to the control switches 18 of the valves, so that each valve is controlled not only in dependence upon its own condition but also in dependence upon the condition of other valves in the plant.

**Claims**

1. A motor operated valve comprising a valve housing (11) having a fluid inlet (12) and outlet (13), a valve member (14) mounted for movement in the housing between relatively open and closed positions for selectively obturating fluid flow between the inlet and the outlet, a motor (16) for driving the valve member, means for controlling torque exerted by the motor, and means for controlling the position of the valve member, characterised by means (21, 22, 23, 30) for producing a cyclic signal representative of the actual speed of the motor; means (42, 43) for operating on said speed signal to provide a torque signal indicative of the torque exerted by the motor; torque limit means (46, 47) for comparing said torque signal with a preset value thereof to provide torque output signal indicative of whether the motor torque exceeds a given value: means (41, 18) for controlling driving power supplied to the motor in dependence upon said torque output signal, so as to control the motor torque to not exceed said given value; position means (31, 32, 34, 35) responsive to said cyclic signal to provide a position signal representative of the position of the valve member, and position comparing means (37, 38) for comparing said position signal with at least a preset value thereof to provide a position output signal indicative of when the valve member reaches a given position.

2. A valve according to claim 1 wherein the motor (16) drives the valve member (14) through a reduction gearing (17) with a predetermined gear ratio, characterised in that the position means (31, 32, 34, 35) includes selectively adjustable means (32) for adjusting the value of the position signal in dependence upon the value of said gear ratio.

3. A valve according to claim 2 wherein said position means (31, 32, 34, 35) includes a counter arranged to count cycles of said cyclic signal and said selectively adjustable means comprises a programmable divider (32) for dividing the frequency of the cyclic signal supplied to the counter.

4. A valve according to claim 3 including means (27) for discriminating between forward and backward movement of the motor, and for incrementing or decrementing the count effected by the counter (31) in dependence on whether the motor (16) is performing backward or forward movement.

5. A valve according to claim 6 or 7 wherein said position comparing means (37, 38) includes at least one position limit switch arranged to be operated when said count established by the counter reaches a given value.

6. A valve according to any preceding claim wherein the means for operating on the speed signal comprises: means (42) for producing a referencing signal indicative of the speed that the motor (16) will achieve under given load conditions; and torque comparing means (43) for comparing said reference signals and said actual speed signal to provide said torque signal.

7. A valve as claimed in claim 6 wherein the motor (16) operates for given load conditions, at a speed determined by a parameter of driving power supplied to the motor, and wherein said reference signal providing means (42) includes means responsive to the value of said parameter of the driving power for controlling the value of said reference signal.

8. A valve as claimed in claim 7 wherein the motor (16) comprises a synchronous electric motor for being driven by an alternating electric supply, said speed signal producing means (21, 22, 23, 30) is adapted to produce an electrical signal of a frequency determined by the actual speed of the motor, and said torque comparing means (43) is arranged to compare the frequency of the supply with the frequency of said electrical signal so as to produce said torque signal.

9. A valve as claimed in any one of claims 6 to 8 wherein said torque limit means (46, 47) comprises a torque limit switch arranged to operate in response to said torque signal reaching said preset value.

10. A valve according to any preceding claim wherein said cyclic signal is produced by means of at least one magnet (22) mounted to be moved in a rotary path by the motor, and a Hall effect switch (23, 24) mounted to be operated cyclically in response to successive rotations of the magnet past the switch.

**Patentansprüche**

1. Motorbetriebenes Ventil mit einem einen Flüssigkeitseinlaß (12) und -auslaß (13) aufweisenden Ventilgehäuse (11), einem Ventilkörper (14), der in dem Gehäuse zwischen jeweils einer offenen und einer geschlossenen Stellung bewegbar angeordnet ist, um wahlweise den Flüssigkeitsdurchfluß zwischen dem Einlaß und dem Auslaß zu erlauben oder zu stoppen, einem Motor (16), um den Ventilkörper anzutreiben, Mitteln, um das von dem Motor ausgeübte Drehmoment zu steuern und Mitteln zum Steuern der Stellung des Ventilkörpers, gekennzeichnet durch Mittel (21, 22, 23, 30) zum Erzeugen eines zyklischen Signals, das die tatsächliche Geschwindigkeit des Motors anzeigt; Mittel (42, 43), die mit diesem Geschwindigkeitssignal arbeiten, um ein Signal zu erzeugen, das das vom Motor ausgeübte Drehmoment anzeigt; Drehmomentbegrenzungsmittel (46, 47), die das Drehmomentsignal mit einem vorbestimmten Wert vergleichen, um ein Drehmomentausgangssignal zu erzeugen, das anzeigt, ob das Motordrehmoment einen gegebenen Wert übersteigt; Mittel (41, 18) zum Steuern der dem Motor in Abhängigkeit von dem Drehmomentausgangssignal zugeführten Antriebskraft, so daß das Motordrehmoment dahingehend gesteuert wird, daß es den gegebenen Wert nicht übersteigt; auf das zyklische Signal ansprechende Positionniermittel (31, 32, 34, 35) zum Erzeugen eines Stellungssignals, das die Stellung des Ventilkörpers angibt, und Mittel (37, 38) zum Vergleichen der Stellung, die das Stellungssignal mit wenigstens einem vorbestimmten Wert vergleichen, um ein Stellungsausgangssignal zu erzeugen, das anzeigt, wann der Ventilkörper eine vorbestimmte Stellung erreicht.

2. Ventil nach Anspruch 1, bei dem der Motor (16) den Ventilkörper (14) über ein Reduktionsgetriebe (17) mit einem vorbestimmten Übersetzungsverhältnis antreibt, dadurch gekennzeichnet, daß die Positioniermittel (31, 32, 34, 35) wahlweise verstellbare Mittel (32) zum Einstellen des Werts des Stellungssignals in Abhängigkeit von dem Wert des Übersetzungsverhältnisses aufweisen.

3. Ventil nach Anspruch 2, bei dem die Positioniermittel (31, 32, 34, 35) einen Zähler zum Zählen des Takts des zyklischen Signals aufweisen und die wahlweise verstellbaren Mittel einen programmierbaren Verteiler (32) aufweisen, um die Frequenz des dem Zähler zugeführten zyklischen Signals zu teilen.

4. Ventil nach Anspruch 3, mit Mitteln (27) zum Unterscheiden zwischen Vorwärts- und Rückwärtslauf des Motors und zum Steigern oder Vermindern der Zählrate des Zählers (31) in Abhängigkeit davon, ob der Motor (16) vorwärts oder rückwärts läuft.

5. Ventil nach Anspruch 6 oder 7, bei dem die Mittel (37, 38) zum Vergleichen der Stellung mindestens einen Grenzstellungsschalter einschließen, der betätigt wird, wenn die vom Zähler erzeugte Zählrate einen gegebenen Wert erreicht.

6. Ventil nach irgendeinem der vorhergehenden Ansprüche, bei dem die mit dem Geschwindigkeitssignal arbeitenden Mittel folgendes aufweisen: Mittel (42) zum Erzeugen eines Bezugssignals, das die Geschwindigkeit anzeigt, die der Motor (16) unter gegebenen Belastungsbedingungen erreicht und Mittel (43) zum Vergleichen des Drehmoments, um die Bezugssignale und das Signal der tatsächlichen Geschwindigkeit zu vergleichen und das Drehmomentsignal zu erzeugen.

7. Ventil nach Anspruch 6, bei dem der Motor (16) unter gegebenen Belastungsbedingungen mit einer Geschwindigkeit läuft, die durch einen Parameter der dem Motor zugeführten Antriebskraft bestimmt wird, und bei dem die ein Bezugssignal erzeugenden Mittel (42) Mittel einschließen, die auf den Wert des Parameters der Antriebskraft ansprechen, um den Wert des Bezugssignals zu steuern.

8. Ventil nach Anspruch 7, bei dem der Motor (16) aus einem durch eine elektrische Wechselstromquelle angetriebenen elektrischen Synchronmotor besteht, wobei die ein Geschwindigkeitssignal erzeugenden Mittel (21, 22, 23, 30) so ausgebildet sind, daß sie ein elektrisches Signal mit einer von der tatsächlichen Geschwindigkeit des Motors bestimmten Frequenz erzeugen, und wobei die Mittel (43) zum Vergleichen des Drehmoments so ausgebildet ist, daß sie die Frequenz der Quelle mit der Frequenz des elektrischen Signals vergleicht, um das das Drehmoment betreffende Signal zu erzeugen.

9. Ventil nach irgendeinem der Ansprüche 6 bis 8, bei dem die Mittel (46, 47) zum Begrenzen des Drehmoments einen Drehmomentbegrenzungsschalter aufweisen, der in Abhängigkeit von dem den vorgegebenen Wert erreichenden Drehmomentsignal arbeitet.

10. Ventil nach irgendeinem der vorhergehenden Ansprüche, bei dem das zyklische Signal durch mindestens einen Magneten (22), der so angeordnet ist, daß er durch den Motor auf einer Kreisbahn bewegt wird, und einen Halleffektschalter (23, 24), der so angeordnet ist, daß er zyklisch in Abhängigkeit von aufeinanderfolgenden an dem Schalter vorbei führenden Rotationen des Magneten betätigt wird, erzeugt wird.

## Revendications

1. Vanne commandée par un moteur comprenant une chambre (11) ayant une entrée (12) et une sortie (13) de fluide, un élément (14) de vanne monté mobile dans la chambre entre les positions relativement "ouverte" et "fermée" afin d'obturer sélectivement l'écoulement de fluid entre l'entrée et la sortie, un moteur (16) pour entraîner l'élément de vanne, des moyens pour contrôler le couple exercé par le moteur, et des moyens pour contrôler la position de l'élément de vannes, caractérisee par des moyens (21, 22, 23, 30) de production d'un signal cyclique représentatif de la vitesse réelle du moteur; des moyens (42, 43) agissant sur ledit signal de vitesse afin de produire un signal de couple indicatif du couple exercé par le moteur; des moyens (46, 47) de limitation du couple comparant ledit signal de couple avec un valeur prédéterminée afin de produire un signal de couple en sortie indiquant si le couple du moteur excède une valeur donnée; des moyens (41, 18) de contrôle de la puissance motrice alimentant le moteur en fonction dudit signal de couple en sortie, afin de contrôler que le couple du moteur n'excède pas ladite valeur donée; des moyens (31, 32, 34, 35) de position sensibles audit signal cyclique fournissant un signal de position représentatif de la position de l'élément de vanne, et des moyens (37, 38) de comparaison pour comparer ledit signal de position avec au moins une valeur prédéterminée afin de fournir un signal de position en sortie indicatif du moment où l'élément de vanne atteint une position donnée.

2. Vanne selon la revendication 1, dans laquelle le moteur (16) actionne l'élément (14) de vanne par l'intermédiaire d'un réducteur (17) avec un rapport réducteur prédéterminé, caracterisee par le fait que les moyens (31, 32, 34, 35) de position comprennent des moyens (32) réglables sélectivement afin d'ajuster la valeur du signal de position en fonction de la valeur dudit rapport réducteur.

3. Vanne selon la revendication 2, dans laquelle lesdits moyens de position (31, 32, 34, 35) comportent un compteur adapté pour compter les cycles dudit signal cyclique et lesdits moyens réglables sélectivement comprennent un démultiplicateur de fréquence (32) divisant la fréquence du signal cyclique fournie au compteur.

4. Vanne selon la revendication 3, comprenant des moyens (27) pour faire la distinction entre la direction avant ou arrière du moteur, et pour incrémenter ou décrémenter le comptage effectué par le compteur (31) en fonction du fait que le moteur (16) tourne dans la direction avant ou arrière.

5. Vanne selon l'une des revendications 3 ou 4, dans laquelle lesdits moyens (37, 38) de comparaison de la position comprennent au moins un commutateur de fin de course adapté pour être actionné lorsque ledit comptage établi par le compteur atteint une valeur donnée.

6. Vanne selon l'une quelconque des revendications précédentes dans laquelle les moyens pour agir sur le signal de vitesse comprennent: des moyens (42) pour produire un signal de référence indicatif de la vitesse que le moteur atteindra sous certaines conditions de charge; et des moyens (43) de comparaison du couple pour comparer lesdits signaux de référence et ledit signal de vitesse réelle afin de fournir un signal de couple.

7. Vanne selon la revendication 6, dans laquelle le moteur (16) fonctionne pour des conditions de charge données, avec une vitesse déterminée par un paramètre de la puissance motrice alimentant le moteur, et dans laquelle lesdits moyens (42) pour fournir un signal de référence comportent des moyens sensibles à la valeur dudit paramètre de la puissance motrice afin de contrôler la valeur dudit signal de référence.

8. Vanne selon la revendication 7, dans laquelle le moteur (16) comprend un moteur électrique synchrone actionné par une alimentation en courant électrique alternatif, lesdits moyens (21, 22, 23, 30) de production d'une signal de vitesse sont adaptés pour produire un signal électrique de fréquence déterminé par la vitesse réelle du moteur, et lesdits moyens (43) de comparaison du couple sont adaptés pour comparer la fréquence de l'alimentation en courant avec la fréquence dudit signal électrique afin de produire ledit signal de couple.

9. Vanne selon l'une quelconque des revendications 6 à 8 dans laquelle lesdits moyens limiteurs de couple (46, 47) comprennent un interrupteur limiteur de couple adapté pour agir en réponse audit signal de couple lorsque celui-ci atteint ladite valeur prédéterminée.

10. Vanne selon l'une quelconque des revendications précédentes dans laquelle ledit signal cyclique est produit au moyen d'au moins un aimant (22) monté pour être mû selon un trajet rotatif par le moteur, et un interrupteur (23, 24) à effet Hall monté pour être actionné cycliquement en réponse à des rotations successives de l'aimant au-delà de l'interrupteur.

FIG. 1

FIG. 2